# EUROPEAN PATENT SPECIFICATION

(11) **EP 2 819 407 B1**
(45) Date of publication and mention of the grant of the patent: **13.03.2019**
(21) Application number: 13173990.6
(22) Date of filing: 27.06.2013
(51) Int. Cl.: H04N 7/18, H04L 29/08, H04W 8/00

(54) **System for automatic connection between NVR and IP camera**
System zur automatischen Verbindung zwischen NVR- und IP-Kamera
Système de connexion automatique entre NVR et caméra IP

(43) Date of publication of application: 31.12.2014
(73) Proprietor: Idis Co., Ltd., Daejeon-si (KR)
(72) Inventor: Kim, Dae-Won, SEOUL (KR); Byeon, Hyo-Jin, GYEONGGI-DO (KR); Heo, Jun-Hyeok, SEOUL (KR)
(74) Representative: Brann AB

(56) References cited:
- US-A1- 2012 113 265
- Anonymous: "Zero-configuration networking - Wikipedia, the free encyclopedia", , 29 May 2013 (2013-05-29), XP055085974, Retrieved from the Internet: URL:http://en.wikipedia.org/w/index.php?ti tle=Zero-configuration_networking&oldid=55 7295731 [retrieved on 2013-10-30]
- ERIK GUTTMAN ET AL: "On the Wire Autoconfiguration for IP Networking: Enabling Local Communication", IEEE INTERNET COMPUTING, vol. 5, no. 3, 1 May 2001 (2001-05-01), pages 81-86, XP055085982, ISSN: 1089-7801, DOI: 10.1109/4236.935181

## Description

### BACKGROUND

### 1. Field

The following description relates to Internet protocol (IP) camera automatic connection settings, and more particularly, to a system of a network video recorder (NVR) device for automatic connection to an IP camera.

### 2. Description of the Related Art

For IP connection to a remote Internet protocol (IP) camera and registration of the connected IP camera, a network video recorder (NVR) Needs to first set up a network, and settings for this setup process may include an IP address of the NVR, a gateway address, a subnet mask, a domain name server address, and the like.

Once the network settings of the NVR is finished, then the network settings of the IP camera should be performed, which is generally not possible to be done solely with the IP camera, but with a specific application installed in a separate personal computer (PC) to make the settings of the IP camera, such as an IP address of the IP camera, a gateway address, a subnet mask and a domain name server address.

Korean Patent Publication No. 10-2012-0033845 (published on April 9, 2012) relates to settings of an NVR for port forwarding. However, to set up a network between the NVR and an IP camera, expertise knowledge about IP network settings is required. Therefore, a general user who does not have enough skilled knowledge of the IP network settings may have difficulties in manually managing the network settings of the NVR and the IP camera.

Hence, there is an increasing need for a technology to automatically establish a connection between an NVR device and an IP camera while reducing a user's intervention.

### [Prior Art Reference]

### [Patent Document]

### (Patent Document 1) Korean Patent Publication No. 10-2012-0033845 (April 9, 2012)

US 2012/113265 A1 discloses a network video recorder which operates a media recorder to store video streams from the IP camera into a media database and includes a zero configuration networking discovery service for automatically detecting and downloading default configurations to the cameras.

"Zero-configuration networking-Wikipedia, the free encyclopedia" retrieved from the internet by URL:http://en.wikipeda.org/w/index.php?title=Zero-configuration_networking&oldid=557295731, discloses a methodology and a set of special technologies that automatically creates a usable computer network based on the Internet Protocol Suite (TCP/IP) when computers or network peripherals are interconnected. It does not require manual operator intervention or special configuration servers.

"On the Wire Autoconfiguration for IP networking: Enabling Local Communication", IEEE INTERNET COMPUTING, vol.5, no. 3, 1 May 2001, pages 81-86, discloses address autoconfiguration. For an IP stack to deliver IP messages, each communicating endpoint (source and destination) requires a unique IP address within the scope in which the address will be used.

### SUMMARY

The following description relates to a system of a network video recorder (NVR) device for automatic connection to an IP camera, which is capable of automatically establishing a connection between the NVR device and the IP camera, with a reduced user's intervention.

In one general aspect, there is provided a system of a network video recorder (NVR) device for automatic connection to an Internet protocol (IP) camera, the system including: an IP configuration unit configured to automatically allocate to the NVR device a non-duplicate IP address within a valid IP address range; a communication unit configured to transmit a camera response request information to the IP camera and receive a camera response information from the IP camera; a camera searching unit configured to broadcast to an IP camera on a local area network (LAN) the camera response request information having as a destination the IP address automatically allocated to the NVR device and to identify the IP camera in response to receiving camera response information transmitted from the IP camera; a camera managing unit configured to analyze the camera response information from the IP camera identified by the camera searching unit to determine whether the IP camera is available to be registered and to, if the IP camera is determined as available, register the IP camera; and a security level managing unit configured to control a security level of a registered IP camera, wherein the security level managing unit transmits a security level setting request information to an IP camera which is not to be exposed to another NVR device, so as to request the IP camera to set its security level for not responding to a camera response request information broadcast from the other NVR device, and wherein when an IP camera is disconnected while having its security level set so as not to respond to camera response request information broadcast from another NVR device, the camera managing unit initializes the IP camera settings in order to allow the IP camera to be available to other NVR devices.

The IP configuration unit may automatically allocate the IP address to the NVR device using a zero configuration scheme that enables automatic settings of an IP network.

The camera searching unit may broadcast to the IP camera on the LAN the camera response request information using a zero-configuration network protocol to request the IP camera to report a camera registration state.

The camera managing unit may analyze the camera registration state information written to a specific region of the zero-configuration network protocol transmitted as the camera response information from the IP camera so as to determine whether the IP camera is available to be registered.

The camera registration state information may include first information for identifying whether the IP camera has been registered or not, second information for identifying whether a registered IP camera is in access to an NVR device or not, and third information including a media access control (MAC) address of an NVR that has registered therein the IP camera.

The camera managing unit may analyze the first information of the camera registration state information and, if the analysis result indicates that the IP camera has not been registered, registers the IP camera.

When an analysis result of the first information of the camera registration information may indicate that the IP camera has been registered, the camera managing unit may analyze the second information, and if the analysis result of the second information indicates that the IP camera is not in access to the NVR device (10), may register the IP camera and identify the NVR device that has registered therein the IP camera, based on the MAC address included in the third information.

The camera managing unit may provide a user interface to allow registration of an image capturing location at which the IP camera captures an image in response to a determination being made that the IP camera is available to be registered, and register the image capturing location through the user interface.

When it is determined that there are a number of IP cameras available to be registered, the camera managing unit may provide a user with a user interface with a display screen divided into segments, and register image capturing locations of each IP camera to the respective segments of the display screen of the user interface.

When it is determined that there are more than a predefined number of IP cameras available to be registered, the camera managing unit may provide the user with a user interface with a display screen divided on a page basis.

The camera managing unit may arrange the screen segments of the user interface according to an order of physical network ports of the NVR device connected with the number of IP cameras.

The camera managing unit may recognize the physical network ports of the NVR device connected with the IP cameras, and displays the images captured by the IP cameras in the respective screen segments of the user interface.

When finding an IP camera available to be registered, the camera managing unit may notify the user of the found IP camera.

Other features and aspects will be apparent from the following detailed description, the drawings, and the claims.

### BRIEF DESCRIPTION OF THE DRAWINGS

FIG. 1 is a diagram illustrating a network connection of a system for automatic connection between a network video recording (NVR) device and an Internet protocol (IP) camera.
FIG. 2 is a block diagram illustrating a system of an NVR device for automatic connection to an IP camera according to an exemplary embodiment of the present invention.
FIG. 3 is a block diagram illustrating a configuration of a client device mounted in an IP camera to automatically connect the IP camera to an NVR device.
FIG. 4 is a flowchart of a method of registering an IP camera in a system of an NVR device for automatic connection according to an exemplary embodiment of the present invention.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

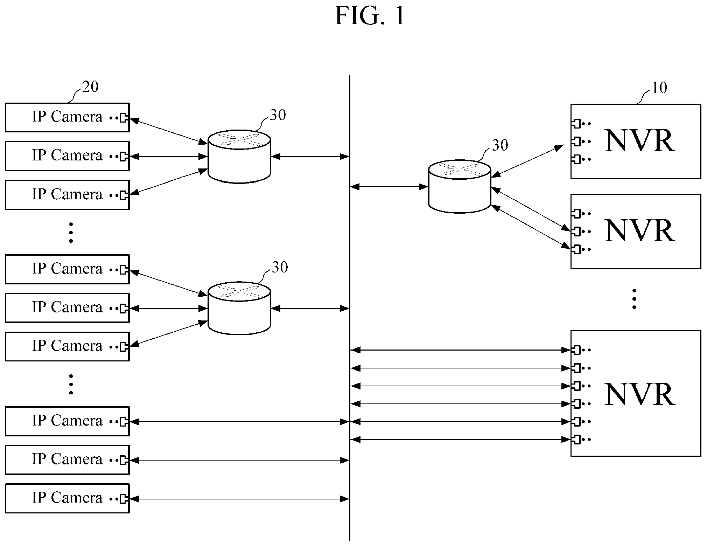

FIG. 1 is a diagram illustrating a network connection of a system for automatic connection between a network video recording (NVR) device and an Internet protocol (IP) camera. Referring to FIG. 1, a local area network (LAN) is formed by at least one NVR device 10 connected with at least one IP camera 20 directly or via a router 30.

The NVR device 10 may include a system 100 for automatic connection to an IP camera. The system may broadcast request information to the IP cameras on the LAN, wherein the request information includes an IP address of the NVR device 10 as a destination of a response from the IP camera. In addition, the system may analyze response information transmitted from the IP camera 20 in response to the request information and register the IP camera by determining whether the IP camera is available to be registered.

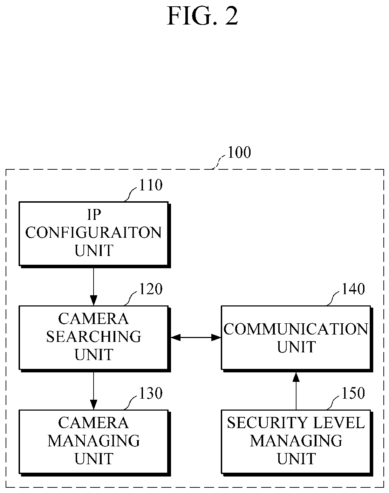

FIG. 2 is a block diagram illustrating a system of an NVR device for automatic connection to an IP camera according to an exemplary embodiment of the present invention. As shown in FIG. 2, the system 100 for automatic connection between the NVR device and IP camera may include an IP configuration unit 110, a camera searching unit 120, a camera management unit 130, and a communication unit 140.

The IP configuration unit 110 automatically allocates o the NVR device a non-duplicate IP address within a valid IP address range. For example, the IP configuration unit 110 may automatically allocate an IP address to the NVR device 10 using a zero-configuration scheme that enables automatic settings of an IP network.

The camera searching unit 120 may broadcast to the IP camera 20 on the LAN camera response request information having as its destination the IP address automatically allocated to the NVR device 10 by the IP configuration unit 110, and identify an IP camera transmitting response information in response to the camera response request information.

For example, the camera searching unit 120 may broadcast camera response request information to the IP camera 20 using a zero-configuration networking protocol so as to instruct the IP camera 20 on the LAN to inform its camera registration state.

The camera managing unit 130 may determine whether the IP camera 20 is available to be registered by analyzing the response information from the IP camera 20 that is identified by the camera searching unit 120, and if the IP camera 20 is determined as being available, register the IP camera 20. Here, IP camera registration information may include an IP address, a gateway address, a subnet mask and a domain name server address of the IP camera.

For example, the camera managing unit 130 may analyze camera registration state information written to a specific region of the zero-configuration networking protocol transmitted as the camera response information from the IP camera 20 and determine whether the IP camera 20 is available to be registered.

The specific region of the zero-configuration networking protocol to which the camera registration state information is written is an additional region that is defined by zero-configuration networking protocol standards.

For example, the camera registration state information may include first information for identifying whether the IP camera has been registered or not, second information for identifying whether the IP camera accesses an NVR device or not, and third information including a media access control (MAC) address of an NVR that has registered therein the IP camera.

The camera managing unit 130 may register the IP camera when the analysis result of the first information of the camera registration state information indicates that the IP camera has not been yet registered. Meanwhile, the camera managing unit 130 may analyze the second information when the analysis result of the first information indicates that the IP camera has been registered, and if the analysis result of the second information indicates that the IP camera is not in access to an NVR, the camera managing unit 130 may register the IP camera. In addition, if the first information indicate that an IP camera has been registered and the second information indicates that the IP camera is in access to an NVR, the camera managing unit 130 may identify which NVR has registered therein the IP camera, based on the MAC address included in the third information.

Once the camera managing unit 130 registers the IP camera 20, an image captured by the IP camera 10 is transmitted to and stored in the NVR device 20 that has registered the IP camera 20.

The communication unit 140 may transmit camera response request information and receive camera response information. Through the communication unit 140, the camera response request information is broadcasted from the camera searching unit 120 to the IP camera 20 and the camera response information is received from the IP camera 20 in response to the camera response request information.

Accordingly, it is feasible to establish automatic connection between the NVR device and the IP camera while reducing user's intervention, and hence a user without expert knowledge about IP network settings does not have to manually adjust network settings for the NVR device and the IP camera, and it is possible to prevent probable errors in settings which may occur during manual setting process and to prevent unnecessary time spent on setting up a network between the NVR device and the IP camera.

In another aspect, the camera managing unit 130 may provide a user interface to enable the user to register an image capturing location at which the IP camera captures an image in response to the determination being made that the IP camera 20 is available to be registered.

In this case, if there are a number of IP cameras determined as available to be registered, a user interface with a display screen divided into segments may be provided, such that the image capturing locations of each IP camera can be registered in the respective screen segments.

In the meantime, when it is determined that there are more than a given number of IP cameras available to be registered, the camera managing unit 130 may provide a user interface with a display screen divided on a page basis.

In addition, the camera managing unit 130 may arrange the screen segments of the user interface according to the order of physical network ports of the NVR device connected with the number of IP cameras.

In this case, the camera managing unit 130 may recognize the physical network ports of the NVR device connected with the IP cameras, and each screen segment of the user interface may display the image output from each of the IP cameras.

As a result, the user only needs to select a screen position at which each image from the IP cameras is output while watching the images transmitted from the IP cameras, and thereby it is possible to establish automatic connection between the NVR device and the IP camera while reducing the user's intervention.

Accordingly, the user who does not have expert knowledge about the IP network settings does not have to experience inconvenience in manually adjusting the network settings for the connection between the NVR device and the IP camera, and also it is possible to prevent errors which may occur in manual settings and to prevent unnecessary time wasted on the network settings.

In additional aspect, the system 100 may further include a security level managing unit 150. The security level managing unit 150 may control a security level of the registered IP camera.

For example, the security level managing unit 150 may transmit security level setting request information to an IP camera 20 which is not to be exposed to another NVR device, so as to request the IP camera 20 to set its security level for not responding to camera response request information broadcast from the other NVR device.

For example, in response to receiving the security level setting request information broadcast from the NVR device, the IP camera 20 does not transmit camera response information to the other NVR device, thereby preventing itself from being exposed to the other NVR device.

In additional aspect, when an IP camera is disconnected while having its security level set so as not to respond to camera response request information broadcast from another NVR device, the camera managing unit 130 may initialize the IP camera settings, thereby allowing the IP camera to be available to other NVR devices.

In additional aspect, when finding an IP camera available to be registered, the camera managing unit 130 may notify the user of the IP camera. For example, the camera managing unit 130 may use a sound to notify the user of a found IP camera that is available to be registered.

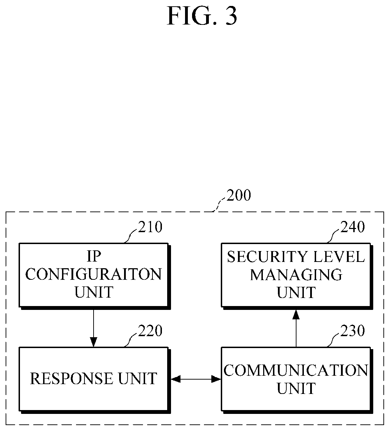

FIG. 3 is a block diagram illustrating a configuration of a client device mounted in an IP camera to automatically connect the IP camera to an NVR device. As shown in FIG. 3, the client device 200 to automatically connect the IP camera to the IP camera may include an IP configuration unit 210, a response unit 220, and a communication unit 230.

The IP configuration unit 210 may automatically allocate to the IP camera 20 a non-duplicate IP address within a valid IP address range. For example, the IP configuration unit 210 may automatically allocate to the IP camera 20 an IP address using a zero configuration scheme that enables automatic settings of an IP network.

In response to receiving camera response request information broadcast from the NVR device 10 and having as a destination an IP address of the NVR device, the response unit 220 may transmit camera response information to the IP address of the NVR device 10.

For example, the response unit 220 may write, as the camera response information, camera registration state information to a specific region of a zero-configuration networking protocol, and transmit the zero-configuration networking protocol to the NVR device 10.

In this case, the specific region of the zero-configuration networking protocol to which the camera registration state information is written is an additional region specified by zero-configuration networking protocol standards.

For example, the camera registration state information may include first information for identifying whether the IP camera has been registered or not, second information for identifying whether the IP camera accesses an NVR device or not, and third information including a MAC address of an NVR that has registered therein the IP camera.

The communication unit 230 may receive the camera response request information from the NVR device 10, and transmit camera response information to the NVR device 10 in response to the camera response request information. The communication unit 230 enables the transmission/reception of information with the NVR device 10.

In additional aspect, the client device 200 may further include a security level setting unit 240. The security level setting unit 240 may receive security level setting request information from the NVR device 10 and update a security level of the IP camera in response to the received security level setting request information.

For example, in response to the security level setting request information broadcast from the NVR device to request the IP camera to set its security level so as not to respond to camera response request information broadcast from another NVR device, the security level setting unit 240 may set the security level of the IP camera so as not to respond to the camera response request information broadcast from the other NVR device.

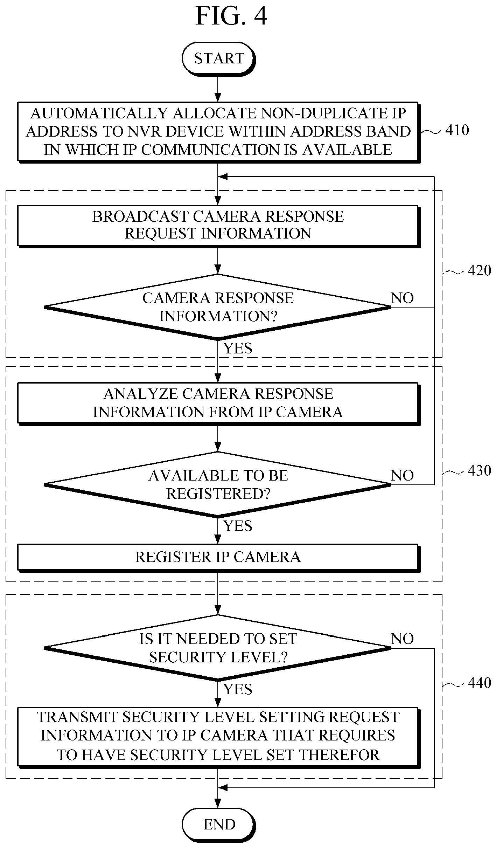

IP camera registration procedures of a system of an NVR device for automatic connection to an IP camera will be described with reference to FIG. 4. FIG. 4 is a flowchart of a method of registering an IP camera in a system of an NVR device for automatic connection according to an exemplary embodiment of the present invention.

In 410, the system of the NVR device automatically allocates to the NVR device a non-duplicate IP address within a valid IP address range. The automatic allocation of the IP address to the NVR device is described above, and thus detailed description will not be reiterated.

Upon allocating the IP address to the NVR device, the system broadcasts camera response request information having as a destination the IP address of the NVR device to an IP camera present on an LAN and receives camera response information from the IP camera in response to the camera response request information in 420.

Upon receiving the camera response information from the IP camera, the system of the NVR device analyzes the camera response information to determine whether the IP camera is available to be registered, and if the IP camera is determined as available, registers the IP camera in 430. The registration of the IP camera is described above, and thus the detailed description thereof will not be reiterated.

If the IP camera registered in 430 is required to have its security level set, the system transmits security level setting request information to the IP camera In 440.

Then, in response to the security level setting request information, the IP camera updates the level security. For example, the security level setting request may request the IP camera to set its security level so as not to respond to camera response request information broadcast from another NVR device.

Accordingly, it is possible to automatically establish a connection between the NVR device and the IP camera while reducing the user's intervention, and hence a user who does not have enough expertise knowledge about IP network settings may be able to avoid experiencing inconvenience in manually adjusting network settings and also it is possible to prevent errors which may occur in manual settings and to prevent unnecessary time wasted on the network setting management process.

The embodiments of the present invention may be applicable to various fields, such as IP camera automatic setting fields and the application fields of the IP camera automatic settings.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A system (100) of a network video recorder (NVR) device (10) for automatic connection to an Internet protocol (IP) camera (20), the system (100) comprising:
an IP configuration unit (110) configured to automatically allocate to the NVR device (10) a non-duplicate IP address within a valid IP address range; and
a communication unit (140) configured to transmit a camera response request information to the IP camera (20) and receive a camera response information from the IP camera (20);
a camera searching unit (120) configured to broadcast to an IP camera (20) on a local area network (LAN) the camera response request information having as a destination the IP address automatically allocated to the NVR device (10) and to identify the IP camera (20) in response to receiving camera response information transmitted from the IP camera (20);
a camera managing unit (130) configured to analyze the camera response information from the IP camera (20) identified by the camera searching unit (120) to determine whether the IP camera (20) is available to be registered and to, if the IP camera is determined as available, register the IP camera; **characterized in that**
the system further comprises
a security level managing unit (150) configured to control a security level of a registered IP camera (20),
wherein the security level managing unit (150) transmits a security level setting request information to an IP camera (20) which is not to be exposed to another NVR device (10), so as to request the IP camera (20) to set its security level for not responding to a camera response request information broadcast from the other NVR device (10), and
wherein when an IP camera (20) is disconnected while having its security level set so as not to respond to camera response request information broadcast from another NVR device (10), the camera managing unit (130) initializes the IP camera settings in order to allow the IP camera (20) to be available to other NVR devices (10).

2. The system of claim 1, wherein the IP configuration unit (110) automatically allocates the IP address to the NVR device (10) using a zero configuration scheme that enables automatic settings of an IP network.

3. The system of claim 2, wherein the camera searching unit (120) broadcasts to the IP camera (20) on the LAN the camera response request information using a zero-configuration network protocol to request the IP camera (20) to report a camera registration state.

4. The system of claim 3, wherein the camera managing unit (130) analyzes the camera registration state information written to a specific region of the zero-configuration network protocol transmitted as the camera response information from the IP camera (20) so as to determine whether the IP camera is available to be registered.

5. The system of claim 4, wherein the camera registration state information includes first information for identifying whether the IP camera has been registered or not, second information for identifying whether a registered IP camera is in access to an NVR device or not, and third information including a media access control (MAC) address of an NVR that has registered therein the IP camera.

6. The system of claim 5, wherein the camera managing unit (130) analyzes the first information of the camera registration state information and, if the analysis result indicates that the IP camera has not been registered, registers the IP camera (20).

7. The system of claim 5, wherein when an analysis result of the first information of the camera registration information indicates that the IP camera has been registered, the camera managing unit (130) analyzes the second information, and if the analysis result of the second information indicates that the IP camera (20) is not in access to the NVR device (10), registers the IP camera and identifies the NVR device that has registered therein the IP camera, based on the MAC address included in the third information.

8. The system of claim 1, wherein the camera managing unit (130) provides a user interface to allow registration of an image capturing location at which the IP camera (20) captures an image in response to a determination being made that the IP camera is available to be registered, and registers the image capturing location through the user interface.

9. The system of claim 8, wherein when it is determined that there are a number of IP cameras available to be registered, the camera managing unit (130) provides a user with a user interface with a display screen divided into segments, and registers image capturing locations of each IP camera to the respective segments of the display screen of the user interface.

10. The system of claim 9, wherein when it is determined that there are more than a predefined number of IP cameras available to be registered, the camera managing unit (130) provides the user with a user interface with a display screen divided on a page basis.

11. The system of claim 9, wherein the camera managing unit (130) arranges the screen segments of the user interface according to an order of physical network ports of the NVR device (10) connected with the number of IP cameras (20).

12. The system of claim 11, wherein the camera managing unit (130) recognizes the physical network ports of the NVR device (10) connected with the IP cameras (20), and displays the images captured by the IP cameras in the respective screen segments of the user interface.

13. The system of claim 1, wherein when finding an IP camera (20) available to be registered, the camera managing unit (130) notifies the user of the found IP camera.

## Patentansprüche

1. System (100) eines Netzwerk-Videorecorder(NVR)-Geräts (10) zur automatischen Verbindung mit einer Internet-Protocol(IP)-Kamera (20), wobei das System (100) umfasst:
- eine IP-Konfigurationseinheit (110), die dazu konfiguriert ist, dem NVR-Gerät (10) automatisch eine nicht duplizierte IP-Adresse innerhalb eines gültigen IP-Adressbereichs zuzuweisen; und
- eine Kommunikationseinheit (140), die dazu konfiguriert ist, eine Kameraantwort-Anforderungsinformation an die IP-Kamera (20) zu senden und eine Kameraantwortinformation von der IP-Kamera (20) zu empfangen;
- eine Kamerasucheinheit (120), die dazu konfiguriert ist, an eine IP-Kamera (20) auf einem lokalen Netzwerk (LAN) die Kameraantwort-Anforderungsinformation zu übertragen, die als ein Ziel die dem NVR-Gerät (10) automatisch zugewiesene IP-Adresse aufweist, und die IP-Kamera (20) ansprechend auf das Empfangen der von der IP-Kamera (20) gesendeten Kameraantwortinformation zu identifizieren;
- eine Kameraverwaltungseinheit (130), die dazu konfiguriert ist, die Kameraantwortinformation von der durch die Kamerasucheinheit (120) identifizierten IP-Kamera (20) zu analysieren, um zu bestimmen, ob die IP-Kamera (20) zur Registrierung zur Verfügung steht, und, wenn die IP-Kamera als verfügbar bestimmt wird, die IP-Kamera zu registrieren;
- **dadurch gekennzeichnet, dass** das System weiter umfasst:
- eine Sicherheitsstufen-Verwaltungseinheit (150), die dazu konfiguriert ist, eine Sicherheitsstufe einer registrierten IP-Kamera (20) zu steuern,
- wobei die Sicherheitsstufen-Verwaltungseinheit (150) eine Sicherheitsstufeneinstellungs-Anforderungsinformation an eine IP-Kamera (20) sendet, die nicht einem weiteren NVR-Gerät (10) gezeigt werden soll, um die IP-Kamera (20) dazu aufzufordern, ihre Sicherheitsstufe dafür, nicht auf eine Kameraantwort-Anforderungsinformation zu antworten, die von dem weiteren NVR-Gerät (10) übertragen wurde, einzustellen, und
- wobei, wenn eine IP-Kamera (20) getrennt ist, während ihre Sicherheitsstufe so eingestellt wird, dass sie nicht auf eine von einem weiteren NVR-Gerät (10) übertragene Kameraantwort-Anforderungsinformation antwortet, die Kameraverwaltungseinheit (130) die IP-Kameraeinstellungen initialisiert, um zu ermöglichen, dass die IP-Kamera (20) für weitere NVR-Geräte (10) zur Verfügung steht.

2. System nach Anspruch 1, wobei die IP-Konfigurationseinheit (110) dem NVR-Gerät (10) die IP-Adresse unter Verwendung eines Null-Konfigurationsschemas, das automatische Einstellungen eines IP-Netzwerks ermöglicht, automatisch zuweist.

3. System nach Anspruch 2, wobei die Kamerasucheinheit (120) der IP-Kamera (20) auf dem LAN die Kameraantwort-Anforderungsinformation unter Verwendung eines Null-Konfigurationsnetzwerkprotokolls überträgt, um die IP-Kamera (20) dazu aufzufordern, einen Kameraregistrierungszustand zu berichten.

4. System nach Anspruch 3, wobei die Kameraverwaltungseinheit (130) die Kameraregistrierungszustands-Information analysiert, die in einen spezifischen Bereich des Null-Konfigurationsnetzwerkprotokolls, das als die Kameraantwortinformation von der IP-Kamera (20) gesendet wurde, geschrieben ist, um zu bestimmen, ob die IP-Kamera zur Registrierung zur Verfügung steht.

5. System nach Anspruch 4, wobei die Kameraregistrierungszustands-Information erste Informationen zum Identifizieren, ob die IP-Kamera registriert worden ist oder nicht, zweite Informationen zum Identifizieren, ob eine registrierte IP-Kamera sich in einem Zugriff auf ein NVR-Gerät befindet oder nicht, und dritte Informationen, die eine Medienzugriffssteuerung(MAC)-Adresse eines NVRs einschließen, das darin die IP-Kamera registriert hat, einschließt.

6. System nach Anspruch 5, wobei die Kameraverwaltungseinheit (130) die erste Information der Kameraregistrierungszustands-Informationen analysiert und, wenn das Analyseergebnis anzeigt, dass die IP-Kamera nicht registriert worden ist, die IP-Kamera (20) registriert.

7. System nach Anspruch 5, wobei, wenn ein Analyseergebnis der ersten Information der Kameraregistrierungsinformationen anzeigt, dass die IP-Kamera registriert worden ist, die Kameraverwaltungseinheit (130) die zweite Information analysiert, und, wenn das Analyseergebnis der zweiten Information anzeigt, dass sich die IP-Kamera (20) nicht in einem Zugriff auf das NVR-Gerät (10) befindet, die IP-Kamera registriert und das NVR-Gerät identifiziert, das darin die IP-Kamera registriert hat, basierend auf der in der dritten Information enthaltenen MAC-Adresse.

8. System nach Anspruch 1, wobei die Kameraverwaltungseinheit (130) eine Benutzeroberfläche bereitstellt, um ansprechend auf eine getroffene Bestimmung, dass die IP-Kamera zur Registrierung zur Verfügung steht, eine Registrierung eines Bilderfassungsortes, an dem die IP-Kamera (20) ein Bild erfasst, zu ermöglichen und den Bilderfassungsort durch die Benutzeroberfläche registriert.

9. System nach Anspruch 8, wobei, wenn bestimmt wird, dass mehrere IP-Kameras zur Registrierung zur Verfügung stehen, die Kameraverwaltungseinheit (130) einem Benutzer eine Benutzeroberfläche mit einem in Segmente unterteilten Bildschirm zur Verfügung stellt und die Bilderfassungsorte jeder IP-Kamera in die entsprechenden Segmente des Bildschirms der Benutzeroberfläche einträgt.

10. System nach Anspruch 9, wobei, wenn bestimmt wird, dass mehr als eine vordefinierte Anzahl von IP-Kameras zur Registrierung zur Verfügung stehen, die Kameraverwaltungseinheit (130) dem Benutzer eine Benutzeroberfläche mit einem auf einer Seitenbasis unterteilten Bildschirm zur Verfügung stellt.

11. System nach Anspruch 9, wobei die Kameraverwaltungseinheit (130) die Schirmsegmente der Benutzeroberfläche gemäß einer Reihenfolge von physischen Netzwerk-Ports des NVR-Geräts (10), die mit der Anzahl von IP-Kameras (20) verbunden sind, anordnet.

12. System nach Anspruch 11, wobei die Kameraverwaltungseinheit (130) die physischen Netzwerk-Ports des NVR-Geräts (10), die mit den IP-Kameras (20) verbunden sind, erkennt und die durch die IP-Kameras erfassten Bilder in den entsprechenden Schirmsegmenten der Benutzeroberfläche anzeigt.

13. System nach Anspruch 1, wobei die Kameraverwaltungseinheit (130), wenn sie eine zur Registrierung zur Verfügung stehende IP-Kamera (20) findet, den Benutzer über die gefundene IP-Kamera benachrichtigt.

## Revendications

1. Système (100) d'un dispositif enregistreur vidéo en réseau (NVR) (10) pour une connexion automatique à une caméra à protocole Internet (IP) (20), le système (100) comprenant :
une unité de configuration IP (110) configurée pour attribuer automatiquement au dispositif NVR (10) une adresse IP non dupliquée dans une plage d'adresses IP valides ; et
une unité de communication (140) configurée pour émettre des informations de demande de réponse de caméra à la caméra IP (20) et recevoir des informations de réponse de caméra de la caméra IP (20) ;
une unité de recherche de caméra (120) configurée pour transmettre à une caméra IP (20) sur un réseau local (LAN) les informations de demande de réponse de caméra ayant pour destination l'adresse IP attribuée automatiquement au dispositif NVR (10) et pour identifier la caméra IP (20) en réponse à la réception d'informations de réponse de caméra transmises par la caméra IP (20) ;
une unité de gestion de caméra (130) configurée pour analyser les informations de réponse de caméra provenant de la caméra IP (20) identifiées par l'unité de recherche de caméra (120) afin de déterminer si la caméra IP (20) est disponible pour être enregistrée et, si la caméra est déterminée comme disponible, enregistrer la caméra IP ;
**caractérisé en ce que** le système comprend en outre une unité de gestion de niveau de sécurité (150) configurée pour commander un niveau de sécurité d'une caméra IP (20) enregistrée,
dans lequel l'unité de gestion de niveau de sécurité (150) transmet des informations de demande de réglage de niveau de sécurité à une caméra IP (20) qui ne doit pas être exposée à un autre dispositif NVR (10), de manière à demander à la caméra IP (20) de régler son niveau de sécurité pour ne pas répondre à des informations de demande de réponse de caméra émises depuis l'autre dispositif NVR (10), et
dans lequel lorsqu'une caméra IP (20) est déconnectée alors que son niveau de sécurité est réglé de manière à ne pas répondre aux informations de demande de réponse de caméra émises par un autre dispositif NVR (10), l'unité de gestion de caméra (130) initialise les réglages de caméra IP afin de permettre à la caméra IP (20) d'être disponible pour d'autres dispositifs NVR (10).

2. Système selon la revendication 1, dans lequel l'unité de configuration IP (110) attribue automatiquement l'adresse IP au dispositif NVR (10) en utilisant un schéma de configuration zéro qui permet des réglages automatiques d'un réseau IP.

3. Système selon la revendication 2, dans lequel l'unité de recherche de caméra (120) émet vers la caméra IP (20) sur le LAN les informations de demande de réponse de caméra en utilisant un protocole de réseau de configuration zéro pour demander à la caméra IP (20) de signaler un état d'enregistrement de caméra.

4. Système selon la revendication 3, dans lequel l'unité de gestion de caméra (130) analyse les informations d'état d'enregistrement de caméra écrites dans une région spécifique du protocole de réseau à configuration zéro transmises en tant qu'informations de réponse de caméra par la caméra IP (20) afin de déterminer si la caméra IP (20) est disponible pour être enregistrée.

5. Système selon la revendication 4, dans lequel les informations d'état d'enregistrement de caméra incluent des premières informations pour identifier si la caméra IP a été enregistrée ou non, des deuxièmes informations pour identifier si une caméra IP enregistrée a ou non accès à un dispositif NVR, et des troisièmes informations incluant une adresse de commande d'accès au support (MAC) d'un NVR dans lequel la caméra IP a été enregistrée.

6. Système selon la revendication 5, dans lequel l'unité de gestion de caméra (130) analyse les premières informations des informations d'état d'enregistrement de caméra et, si le résultat d'analyse indique que la caméra IP n'a pas été enregistrée, enregistre la caméra IP (20).

7. Système selon la revendication 5, dans lequel lorsqu'un résultat d'analyse des premières informations des informations d'enregistrement de caméra indique que la caméra IP a été enregistrée, l'unité de gestion de caméra (130) analyse les deuxièmes informations, et si le résultat d'analyse des deuxièmes informations indique que la caméra IP (20) n'a pas accès au dispositif NVR (10), enregistre la caméra IP et identifie le dispositif NVR dans lequel la caméra IP est enregistrée, en fonction de l'adresse MAC comprise dans les troisièmes informations.

8. Système selon la revendication 1, dans lequel l'unité de gestion de caméra (130) fournit une interface utilisateur pour permettre l'enregistrement d'un emplacement de capture d'image au niveau duquel la caméra IP (20) capture une image en réponse à une détermination selon laquelle la caméra IP est disponible pour être enregistrée, et enregistre l'emplacement de capture d'image via l'interface utilisateur.

9. Système selon la revendication 8, dans lequel, lorsqu'il est déterminé qu'il existe un certain nombre de caméras IP disponibles pour être enregistrées, l'unité de gestion de caméras (130) fournit à un utilisateur une interface utilisateur avec un écran d'affichage divisé en segments et enregistre des emplacements de capture d'image de chaque caméra IP dans les segments respectifs de l'écran d'affichage de l'interface utilisateur.

10. Système selon la revendication 9, dans lequel, lorsqu'il est déterminé qu'il y a plus d'un nombre prédéfini de caméras IP disponibles pour être enregistrées, l'unité de gestion de caméras (130) fournit à l'utilisateur une interface utilisateur avec un écran d'affichage divisé sur une base de page.

11. Système selon la revendication 9, dans lequel l'unité de gestion de caméras (130) organise les segments d'écran de l'interface utilisateur selon un ordre de ports réseau physiques du dispositif NVR (10) reliés avec le nombre de caméras IP (20).

12. Système selon la revendication 11, dans lequel l'unité de gestion de caméra (130) reconnaît les ports de réseau physiques du dispositif NVR (10) reliés aux caméras IP (20) et affiche les images capturées par les caméras IP dans les segments d'écran respectifs de l'interface utilisateur.

13. Système selon la revendication 1, dans lequel, lorsqu'une caméra IP (20) est disponible pour être enregistrée, l'unité de gestion de caméra (130) informe l'utilisateur de la caméra IP trouvée.
